# EUROPEAN PATENT SPECIFICATION

(11) **EP 2 028 090 B1**
(45) Date of publication and mention of the grant of the patent: **04.04.2012**
(21) Application number: 08014782.0
(22) Date of filing: 20.08.2008
(51) Int. Cl.: B62K 11/00, F16F 15/32

(54) **Drive Unit**
Antriebseinheit
Unité d'entraînement

(30) Priority: 20.08.2007 JP 2007214110; 22.07.2008 JP 2008188751
(43) Date of publication of application: 25.02.2009
(73) Proprietor: Yamaha Hatsudoki Kabushiki Kaisha, Iwata-shi, Shizuoka 438-8501 (JP)
(72) Inventor: Nogi, Sadao, Iwata-shi Shizuoka-ken 438-8501 (JP)
(74) Representative: Grünecker, Kinkeldey, Stockmair & Schwanhäusser

(56) References cited:
- EP-A1- 1 798 395
- EP-A2- 1 201 535
- DE-A1- 10 225 991
- FR-A1- 2 835 300
- GB-A- 1 179 253
- GB-A- 2 250 069
- JP-A- 62 288 744
- JP-A- 2003 097 646
- JP-Y- 63 007 725
- US-A- 4 069 905
- US-A- 4 605 386

## Description

The present invention relates to a drive unit for a vehicle, in particular to a technology for adjusting the position of the center of gravity of a clutch and a continuously variable transmission mounted in a straddle-type vehicle (for example, motorcycle).

In general, a straddle-type vehicle has a body frame and a seat on which a rider can be seated straddling the body frame when being seated. Some straddle-type vehicles (for example, motorcycles) are mounted with a clutch for transmitting or interrupting torque to a rear wheel and a continuously variable transmission for continuously varying a speed change ratio (transmission ratio). When a belt-type continuously variable transmission is operated, a pulley around which a belt is wound is rotated around a shaft by the torque of an engine. Moreover, some clutches include a clutch inner and a clutch outer for housing the clutch inner and transmit or interrupt torque between the clutch inner and the clutch outer.

There is a case where a member rotating around a shaft such as a clutch and a pulley has the center of gravity of the member shifted from the center of rotation by a manufacture error. When a clutch or a continuously variable transmission including such member is activated, vibration occurs and becomes a cause of degrading the ride comfort of a vehicle. For this reason, to bring the position of the center of gravity of the member close to the center of rotation, a technology for manufacturing a portion of the member is proposed in Japanese Examined Utility Model Publication No. 63-7725.

However, in the related art, there is a case where a manufacturing work for bringing the position of the center of gravity close to the center of rotation will decrease manufacture efficiency. For example, like a clutch or a continuously variable transmission used in a small size motorcycle, in the case where a member is small in size, a manufacturing range in a clutch or a pulley also becomes small. Hence, when the position of the center of gravity is greatly shifted from the center of rotation by a manufacture error, the member itself needs to be replaced. Moreover, when the work of adjusting the position of the center of gravity is performed in the state where the pulley of a continuously variable transmission is mounted in an engine unit, there is a case where it is difficult to perform a manufacturing work because the pulley is positioned inside in a vehicle width direction (near the center of a shaft). The present invention has been made in view of the problem described above.

Prior art document DE 102 25 991 A1 discloses a friction clutch having a centrifugal mass base body with a thick portion at the outermost circumferential section thereof. Said thick portion is machined in order to have a constant thickness. Said thick portion is provided with balancing openings for receiving balancing mass elements.

It is an objective of the invention to provide a drive unit capable of enhancing the efficiency of the manufacturing work of bringing the position of the center of gravity close to the center of rotation.

According to the present invention, said objective is solved by a drive unit for a vehicle having the features of independent claim 1.

Preferably, the position-of-center-of-gravity adjusting means comprises at least one hole formed in the clutch and/or the continuously variable transmission, preferably in the periphery of the clutch and/or of the continuously variable transmission.

Further, preferably several holes are formed around the shaft, preferably at equal intervals.

Still further, preferably the position-of-center-of-gravity adjusting means comprises at least one additional weight, which is preferably inserted into a hole.

Yet further still, preferably the additional weight is a rivet.

According to a preferred embodiment, the clutch comprises: a clutch inner rotatable around the shaft; a clutch outer rotatable around the shaft and housing the clutch inner, said clutch being configured to transmit or interrupt torque between the clutch outer and the clutch inner, wherein the clutch outer has a thick portion preferably having a larger thickness than remaining portions of the clutch outer, and the clutch outer comprises the position-of-center-of-gravity adjusting means formed at a position separate from an axial center of the shaft of the thick portion, the position-of-center-of-gravity adjusting means being configured to bring the center of gravity of the clutch close to the axial center of the shaft.

Accordingly, the manufacturing work of bringing the position of the center of gravity of the clutch close to its center of rotation can be easily performed. That is, the position-of-center-of-gravity adjusting portion is formed in the thick portion having a large thickness, so that a portion that can be used for bringing the position of the center of gravity of the clutch close to the center of rotation can be increased. Thus, for example, even in the case where the position of the center of gravity of the clutch is greatly shifted from the center of rotation, the clutch itself does not need to be replaced and hence the efficiency of the manufacture work can be enhanced.

Preferably, the thick portion has a hole formed therein as the position-of-center-of-gravity adjusting means.

Further, preferably the clutch outer includes an inner peripheral portion extending in radial direction from an outer peripheral surface of the shaft and an outer peripheral portion further extending in radial direction from the inner peripheral portion, and the thick portion is formed in the outer peripheral portion.

Still further, preferably a central axis of the hole extends in radial or longitudinal direction of the clutch.

According to the subject matter of the independent claim, the work of bringing the position of the center of gravity of the continuously variable transmission close to the center of rotation can be easily performed. That is, the rotary member having the position-of-center-of-gravity adjusting part fitted therein is positioned outside in the vehicle width direction of the pair of sheaves, that is, on the side close to a worker. For this reason, even in the state where the pair of sheaves are mounted on the shaft, the work of bringing the position of the center of gravity close to the center of rotation can be easily performed.

Still further, preferably the position-of-center-of-gravity adjusting means is fitted in the rotary member.

There is also provided an engine unit having an engine and a drive unit according to one of the above embodiments.

There is further provided a vehicle, in particular a straddle-type vehicle, having an engine unit according to the above embodiment.

In the following, the present invention is explained in greater detail by means of embodiments thereof in conjunction with the accompanying drawings, wherein:
- Fig. 1: is a side view of a motorcycle mounted with an engine unit including a clutch and a continuously variable transmission according to one embodiment;
- Fig. 2: is a side view of the engine unit and a vehicle body frame;
- Fig. 3: is a section view of the engine unit;
- Fig. 4: is a section view of the continuously variable transmission and a transmission case;
- Fig. 5: is a side view of the transmission case;
- Fig. 6: is a section view of a driven side pulley included by the continuously variable transmission and a section view along a cut plane passing through a position-of-center-of-gravity adjusting part fixed in the driven side pulley;
- Fig. 7: is a section view taken on a line VII-VII shown in Fig. 6;
- Fig. 8: is a section view of the clutch and a section view along a cut plane passing through a position-of-center-of-gravity adjusting portion formed in the clutch;
- Fig. 9: is a diagram, when viewed in an axial direction, of a clutch outer included by the clutch;
- Fig. 10: is a section view of a clutch according to another embodiment;
- Fig. 11: is a diagram when a clutch according to another embodiment is viewed in the axial direction of a driven shaft and a diagram when the clutch is viewed from a center side in a vehicle width direction;
- Fig. 12: is a section view taken on a line XII-XII shown in Fig. 11;
- Fig. 13: is a front view of an annular stopper included by the clutch shown in Fig. 11 or Fig. 12;
- Fig. 14: is a section view of a driven side pulley according to another embodiment; and
- Fig. 15: is a diagram when the driven side pulley shown in Fig.14 is viewed in an axial direction.

Among others, the following reference signs are used in the figures:

1 motorcycle, 2 vehicle body frame, 3 front wheel, 4 rear wheel, 5 handlebar, 6 steering shaft, 7 front fork, 8 storage case, 9 seat, 10 engine unit (drive unit), 11 rear arm, 12 pivot shaft, 14 cover, 20 engine, 21 crankshaft, 22 cylinder, 23 piston, 24 connecting rod, 25 crankpin, 27 driven shaft (axis), 28 intermediate shaft, 29 output shaft, 30 continuously variable transmission, 31 driving side pulley, 32 fixed sheave, 33 movable sheave, 34 weight roller, 35 plate, 36 fan, 39 belt, 41, 41A driven side pulley, 42 fixed sheave, 43 movable sheave, 44 spring, 45, 45A spring supporting member, 45e position-of-center-of-gravity adjusting portion, 46 collar, 47 key ,48 clip, 49 position-of-center-of-gravity adjusting part, 50 transmission case, 51 case body, 52 support member, 53, 56 bearing, 54, 57 annular member, 55, 59 nut, 58 come-off preventing member, 60 crankcase, 80, 80A, 80B clutch, 81 clutch inner, 82 clutch outer, 82d thick portion, 82e, 82i position-of-center-of-gravity adjusting portion, 83 friction plate, 84 clutch plate, 85 diaphragm spring, 86 weight roller, 87, 87B annular stopper, 87b position-of-center-of-gravity adjusting portion, 88 clip

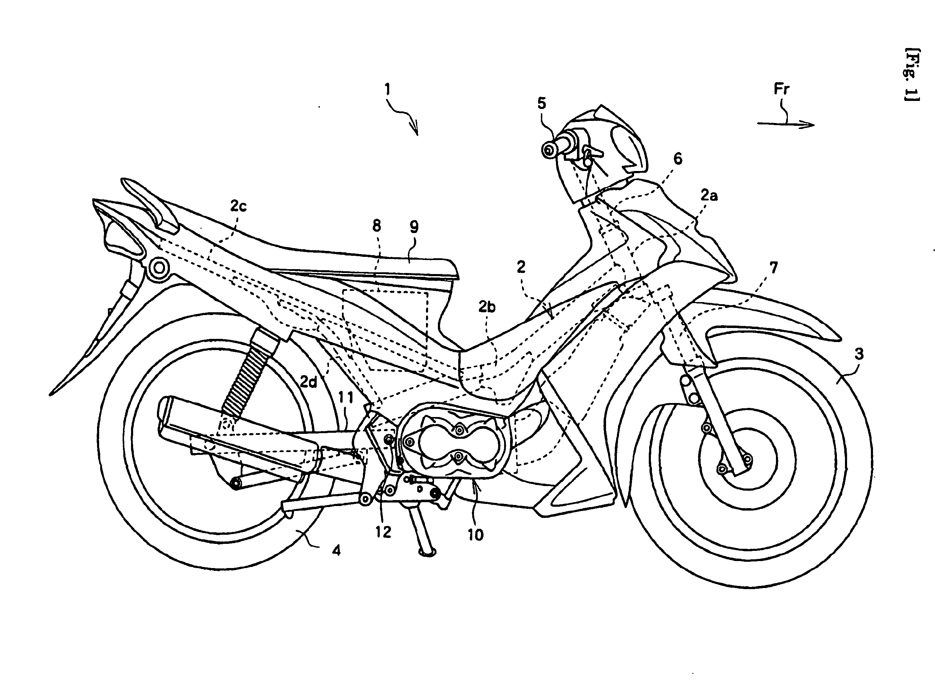

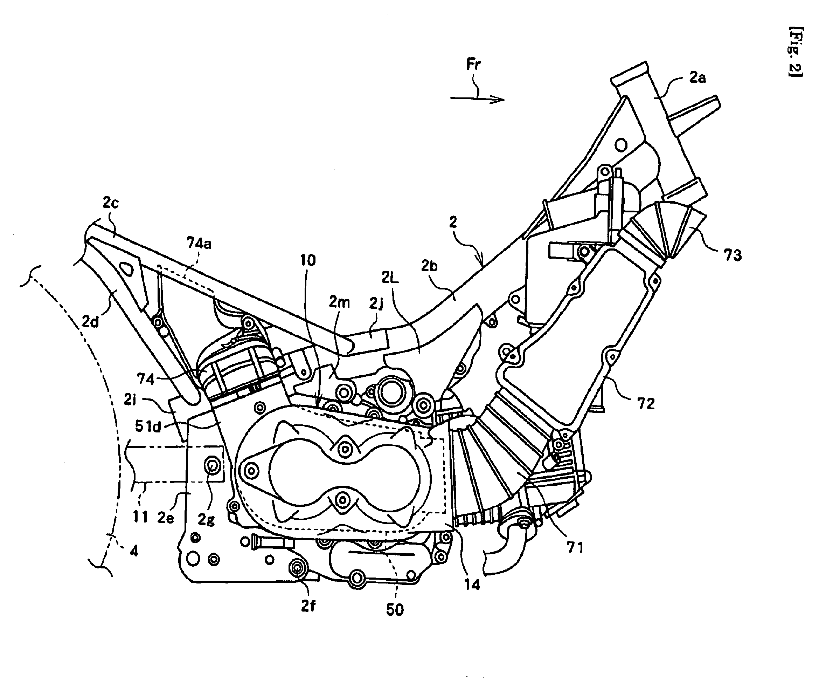

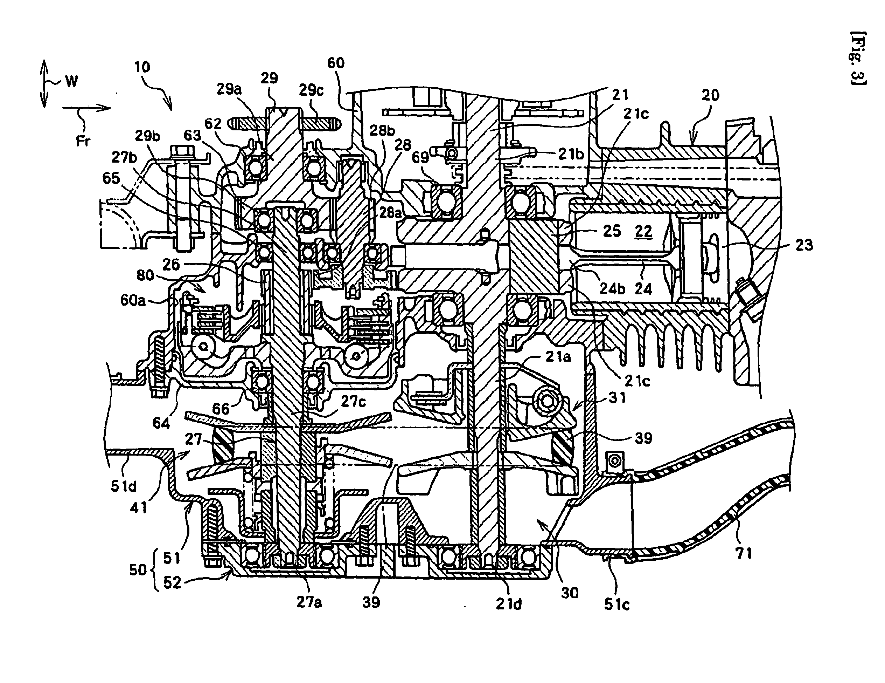

Hereinafter, one embodiment will be described with reference to the drawings. Fig. 1 is a side view of a motorcycle 1 mounted with an engine unit (drive unit) 10 including a continuously variable transmission 30 and a clutch 80 that are examples of an embodiment. Fig. 2 is a side view of a vehicle body frame 2 and the engine unit 10 included by the motorcycle 1. Fig. 3 is a section view of the engine unit 10.

As shown in Fig. 1, the motorcycle 1 includes the engine unit 10 and the vehicle body frame 2. Moreover, as shown in Fig. 2, the vehicle body frame 2 includes: a steering head 2a; a main frame 2b; a seat rail 2c; a stay 2d; and a bracket 2e.

The steering head 2a is fixed to the front end portion of the vehicle body frame 2 and rotatably supports a steering shaft 6. The steering shaft 6 has a handlebar 5 connected to its top end portion. The steering shaft 6 has a front fork 7 connected to its bottom end portion, and the bottom end portion of the front fork 7 supports a front wheel 3.

As shown in Fig. 2, the front end portion of the main frame 2b is connected to the steering head 2a. The main frame 2b is extended slantwise downward toward the rear portion of a vehicle body from its front end portion, and its rear end portion (bottom end portion) 2i is positioned in front of a rear wheel 4. The main frame 2b has a front end portion 2j of the seat rail 2c connected to its middle portion. The seat rail 2c is extended slantwise upward toward the rear portion of the vehicle body from its front end portion 2j. A storage case 8 and a seat 9 are arranged above the seat rail 2c, and the seat rail 2c supports these parts (see Fig. 1). The main frame 2b has the front end portion of the stay 2d connected to its rear end portion 2i, and the stay 2d is extended slantwise upward from its front end portion, and its top end portion is connected to a middle portion of the seat rail 2c. The bracket 2e is a member that is extended downward and that is formed in the shape of a plate and has its top edge portion joined to the rear end portion 2i of the main frame 2b.

The bracket 2e has a support part 2g fixed to its upper portion, the support part 2g supporting a pivot shaft 12 (see Fig. 1). As shown in Fig. 1, the pivot shaft 12 has the front end portion of a rear arm 11 fixed thereto. The rear arm 11 is extended rearward, and its rear end portion supports the axle of the rear wheel 4. The rear arm 11 swings with the pivot shaft 12 as a pivot along with the rear wheel 4 and swings independently of the engine unit 10.

As shown in Fig. 2, the bracket 2e has a portion 2f, to which the engine unit 10 is fixed, on the front side of its bottom end portion. Moreover, brackets 2L, 2m protruding downward are joined to the middle portion of the main frame 2b. The top wall on the front side of a crankcase 60 included by the engine unit 10 is fixed to the bracket 2L, and the top wall on the rear side of the crankcase 60 is fixed to the bracket 2m, and the lower portion of the crankcase 60 is fixed to the portion 2f of the bracket 2e. With this, the engine unit 10 is supported by the vehicle body frame 2.

As shown in Fig. 1 or Fig. 2, the engine unit 10 is arranged below the rear portion of the main frame 2b and in front of the rear wheel 4. As shown in Fig. 3, the engine unit 10 includes; an engine 20; a continuously variable transmission 30; a cutch 80; the crankcase 60; and a transmission case 50 for housing the continuously variable transmission 30.

The engine 20 includes a crankshaft 21, a cylinder 22, and a piston 23. The cylinder 22 is arranged in a position to be slightly slanted upward forward (in a direction shown by Fr in Fig, 3) of the crankcase 60. When an air-fuel mixture of fuel and air sent into the cylinder 22 combusts, the piston 23 reciprocates in the cylinder 22. The piston 23 is coupled to a crankpin 25 disposed in the crankshaft 21 via a connecting rod 24. The reciprocating motion of the piston 23 is converted to a rotational motion by the crankshaft 21 and is outputted to the downstream side of the transmission path of a driving force.

The crankshaft 21 is arranged so as to extend in the vehicle width direction (in a direction shown by W in Fig. 3) in the crankcase 60. The crankshaft 21 includes a right shaft part 21 a, a left shaft part 21 b, and a pair of crank arms 21c, 21 c. The crank arms 21c, 21 c are extended in a radial direction from the base portions of the right shaft part 21 a and the left shaft part 21 b and support the crankpin 25 rotatably.

The left shaft part 21b is extended outward in the vehicle width direction (in a left direction with respect to a direction in which the vehicle travels) from its base portion. The left shaft part 21 b has a generator (not shown) mounted thereon. The right shaft part 21 a is extended outward in the vehicle width direction (in a right direction with respect to the direction in which the vehicle travels) from its base portion. The right shaft part 21 a has the driving side pulley 31 of the continuously variable transmission 30 mounted thereon. The end portion 21d of the right shaft part 21 a is supported by the transmission case 50.

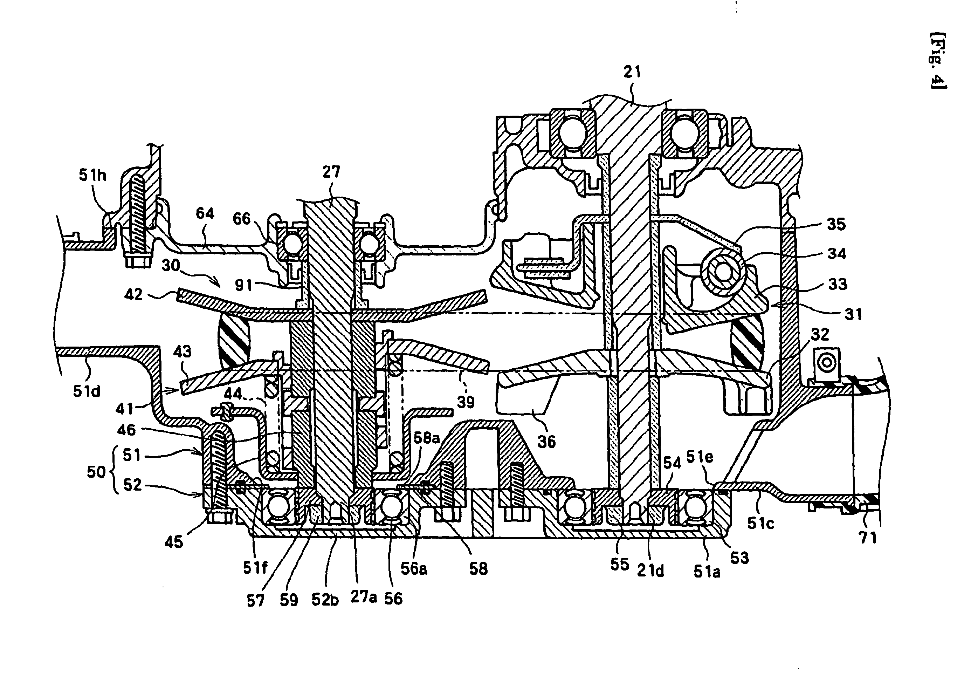

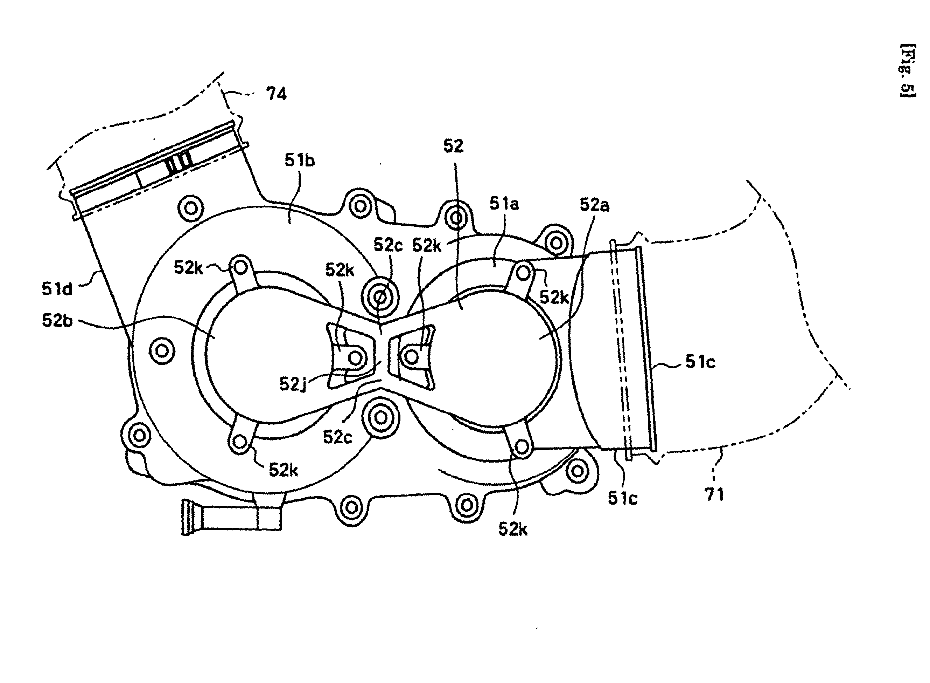

Fig. 4 is a section view of the continuously variable transmission 30 and the transmission case 50. Fig. 5 is a side view of the transmission case 50. In the example shown in Fig. 4, the transmission case 50 is formed in the shape of a cup opening inside in the vehicle width direction (toward the center in the vehicle width direction) and has a case body 51 and a support member 52 disposed therein, the case body 51 housing the continuously variable transmission 30, the support member 52 being fixed to the case body 51 from the outside. The end portion 21d of the crankshaft 21 is protruded in the axial direction from an opening 51e formed in the wall of the front portion of the case body 51. The support member 52 has a drive shaft supporting portion 52a in its front portion and has a driven shaft supporting portion 52b in its rear portion. The drive shaft supporting portion 52a supports the end portion 21d of the crankshaft 21. Here, in the example shown in Fig. 4, the drive shaft supporting portion 52a supports the end portion 21d of the crankshaft 21 via a bearing 53 and an annular member 54. That is, the bearing 53 is fitted inside the drive shaft supporting portion 52a, and the annular member 54 rotated with the inner race of the bearing 53 is arranged inside the inner race. The annular member 54 is fitted on the end portion 21d of the crankshaft 21 and is rotated with the crankshaft 21. Here, the end portion 21 d of the crankshaft 21 has a nut 55 fitted thereon from outside the annular member 54.

As shown in Fig. 3, a driven shaft 27 and an output shaft 29 are arranged at positions rearward separate from the crankshaft 21. The driven shaft 27 is arranged so as to extend in the vehicle width direction, and the driven shaft 27 has a driven side pulley 41 of the continuously variable transmission 30 and a clutch 80 mounted thereon. The driven side pulley 41 is positioned rearward of the driving side pulley 31, and the clutch 80 is arranged inside in the vehicle width direction of the driven side pulley 41.

The driven shaft 27 has a bearing 65 and a bearing 63 fitted on its end portion 27b inside in the vehicle width direction, the bearing 63 being positioned outside in the vehicle width direction of the bearing 65. The outer race of the bearing 65 is supported by the crankcase 60, and the crankcase 60 supports the end portion 27b of the driven shaft 27 via the bearing 65. The bearing 63 has the output shaft 29 fitted on its outer race, and the bearing 63 supports the output shaft 29. The center portion 29a of the output shaft 29 is supported by the crankcase 60 via a bearing 62. The driven shaft 27 has a bearing 66 fitted on its center portion 27c. The outer race of the bearing 66 is supported by a partition member 64 fixed to the crankcase 60, and the crankcase 60 supports the center portion 27c of the driven shaft 27 via the partition member 64 and the bearing 66. Here, the partition member 64 is positioned between the clutch 80 and the driven side pulley 41 and closes a clutch chamber 60a formed in the crankcase 60. The clutch 80 is housed in the clutch chamber 60a. The end portion 27a outside in the vehicle width direction of the driven shaft 27 is supported by the transmission case 50.

As shown in Fig. 4, the end portion 27a of the driven shaft 27 is protruded in the axial direction from an opening 51f formed in the wall of the front portion of the case body 51 and is supported by the driven shaft supporting portion 52b of the support member 52. In the example shown in Fig. 4, the driven shaft supporting portion 52b supports the end portion 27a of the driven shaft 27 via a bearing 56 and an annular member 57. That is, the bearing 56 is fitted inside the driven shaft supporting portion 52b. The annular member 57 that is formed in the shape of a circular ring and that is rotated with the inner race of the bearing 56 is arranged inside the inner race of the bearing 56. The annular member 57 is fitted on the end portion 27a of the driven shaft 27 and is rotated with the driven shaft 27. Here, the end portion 27a of the driven shaft 27 has a nut 59 fitted thereon from outside the annular member 57.

In this regard, in the example shown in Fig. 4, the case body 51 has a come-off preventing member 58 fixed to the edge of the opening 51f thereof, the come-off preventing member 58 preventing the bearing 56 from dropping out inside in the vehicle width direction. The come-off preventing member 58 is, for example, a circular ringshaped member and has its inside diameter made smaller than the outside diameter of the bearing 56. With this, an edge 58a inside the come-off preventing member 58 sandwiches the outer race 56a of the bearing 56 between itself and the driven shaft supporting portion 52b.

Further, as shown in Fig. 5, the support member 52 has plural (here, six) fixing portions 52k formed thereon, the fixing portions 52k being protruded in a radial direction (a direction perpendicular to the center line of the crankshaft 21 or a direction perpendicular to the center line of the driven shaft 27) from the drive shaft supporting portion 52a and the driven shaft supporting portion 52b. These fixing portions 52k are fixed to the outside wall of the case body 51 with bolts.

Still further, as shown in Fig. 4 or Fig. 5, the support member 52 includes a support column portion 52c that is bridged between the drive shaft supporting portion 52a and the driven shaft supporting portion 52b and that is thrust between them.

Here, the continuously variable transmission 30 will be described. The continuously variable transmission 30 is a belt-type continuously variable transmission and, as described above, includes the driving side pulley 31 and the driven side pulley 41. Moreover, the continuously variable transmission 30 has a belt 39 that is looped around the driving side pulley 31 and the driven side pulley 41 and that transmits torque from the driving side pulley 31 to the driven side pulley 41.

As shown in Fig. 4, the driving side pulley 31 includes a fixed sheave 32, a movable sheave 33, and a plate 35. The fixed sheave 32 and the plate 35 have their axial movements restricted, and the movable sheave 33 can be moved in the axial direction between the fixed sheave 32 and the plate 35. The movable sheave 33 faces the fixed sheave 32 in the axial direction, and the front side of the belt 39 is wound around these parts.

Here, a weight roller 34 moved in the radial direction by a centrifugal force is arranged between the movable sheave 33 and the plate 35. When the crankshaft 21 is rotated, the weight roller 34 is moved outside in the radial direction and presses the movable sheave 33 to the fixed sheave 32 side. Then, the belt 39 is pushed and moved forward by the movable sheave 33, whereby the diameter of a portion, around which the belt 39 is wound, of the driving side pulley 31 is enlarged to reduce a speed reduction ratio.

Moreover, the driving side pulley 31 includes a fan 36 for introducing outside air into the transmission case 50. In the example shown in Fig. 4, the fan 36 is formed so as to erect outside in the vehicle width direction from the fixed sheave 32. The case body 51 includes an intake port 51 c for taking in the outside air and an exhaust port 51 d for exhausting air in the transmission case 50 (see Fig. 5). As shown in Fig. 2 and Fig. 5, an air intake duct 71 extended slantwise upward is connected to the intake port 51 c. The air intake duct 71 has an air cleaner 72 fixed to its tip. As shown in Fig. 2, a tip duct 73 protruded upward is fixed to the top portion of the air cleaner 72. As shown in Fig. 2 or Fig. 5, an air exhaust duct 74 extended slantwise upward is connected to the exhaust port 51 d.

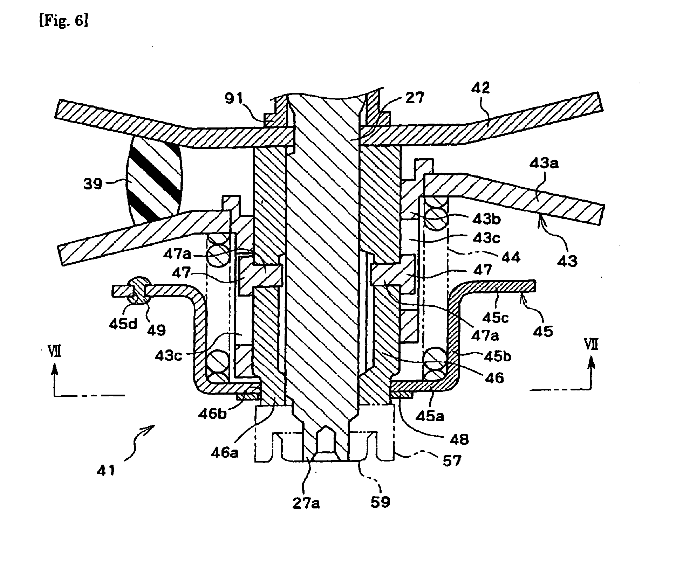

As shown in Fig. 4, the driven side pulley 41 is mounted on the driven shaft 27 and is rotated with the driven shaft 27 by torque transmitted via the belt 39. Fig. 6 is a section view of the driven side pulley 41. As shown in the diagram, the driven side pulley 41 includes a fixed sheave 42 rotated with the driven shaft 27, a movable sheave 43 similarly rotated with the driven shaft 27, and a collar 46 for restricting the axial movement of the fixed sheave 42.

As shown in Fig. 4, the driven shaft 27 has a collar 91, the fixed sheave 42, and the collar 46 fitted thereon. These parts are sandwiched by the bearing 66 and the annular member 57, thereby having their axial movements restricted. Moreover, the collar 46 and the fixed sheave 42 are coupled to the driven shaft 27 by a spline, and these parts are integrally rotated.

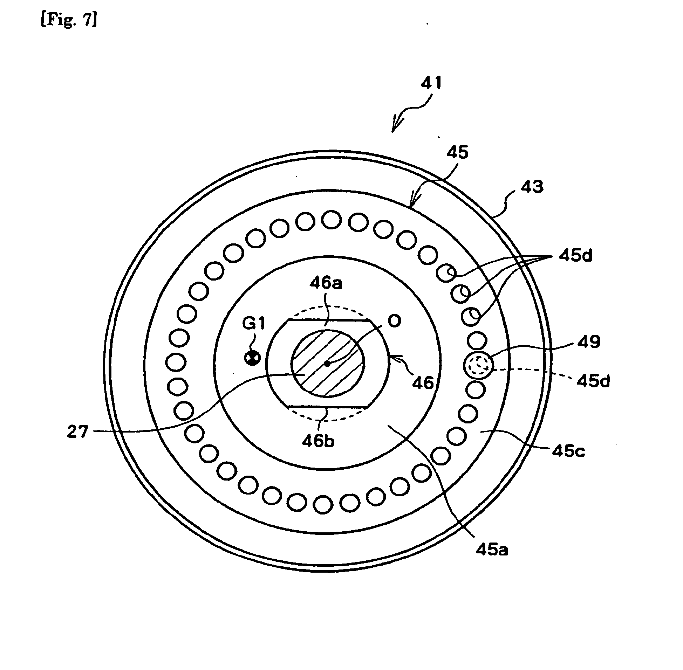

As shown in Fig. 6, a spring supporting member 45 formed in the shape of a circular disk having its center depressed is fitted on the end portion 46a outside in the vehicle width direction of the collar 46. The spring supporting member 45 is positioned outside in the vehicle width direction of the fixed sheave 42 and the movable sheave 43 (on the end portion 27a side of the driven shaft 27). Moreover, the spring supporting member 45 is fixed to the collar 46 so as to be rotated with the collar 46. Fig. 7 is a section view taken on a line VII-VII shown in Fig. 6. In the example described here, a portion of the outer peripheral surface of the end portion 46a of the collar 46 formed in the shape of a circular cylinder is cut away to form a plane portion 46b on the outer peripheral surface thereof. The inner peripheral edge of the spring supporting member 45 is formed in the shape mated with the outside shape of the end portion 46a. With this, the spring supporting member 45 is rotated with the collar 46. Here, in Fig. 6, the end portion 46a of the collar 46 has a clip 48 fixed thereto, the clip 48 being formed in the shape of a letter C and preventing the spring supporting member 45 from dropping out.

As shown in Fig. 6, the movable sheave 43 includes a sheave body 43a extended in the radial direction of the driven shaft 27 and a cylindrical boss part 43b fitted on the collar 46. The boss part 43b has a spring 44 fitted thereon, the spring 44 biasing the movable sheave 43 to the fixed sheave 42 side. The end portion of the spring 44 abuts against the spring supporting member 45, and the spring 44 is pressed onto the fixed sheave 42 side by the spring supporting member 45.

The boss part 43b has guide grooves 43c, 43c formed therein, the guide grooves 43c, 43c being extended in the axial direction. Keys 47, 47 having their tip portions 47a inserted into the collar 46 are arranged in the guide grooves 43c, 43c. With this, the rotation of the movable sheave 43 is transmitted to the collar 46 via the keys 47, 47, and the movable sheave 43 is moved in the axial direction by the guide of the keys 47, 47.

Here, the guide grooves 43c, 43c of the boss part 43b are formed on the sides opposite to each other across the center line of the driven shaft 27.

The rear side of the belt 39 is looped around the sheave body 43a of the movable sheave 43 and around the fixed sheave 42. When the belt 39 is pushed forward by the movable sheave 33 in the driving side pulley 31, the movable sheave 43 is moved in a direction separate from the fixed sheave 42 against the biasing force of the spring 44 in the driven side pulley 41. With this, the diameter of a portion of belt 39 that is wound around the driven side pulley 41 becomes smaller and hence a speed reduction ratio becomes smaller.

There is a case where the position of the center of gravity of the driven side pulley 41 is shifted from the center of rotation (the center line O of the driven shaft 27) by a manufacture error or the like. For this reason, in this embodiment, a position-of-center-of-gravity adjusting part 49 for bringing the position of the center of gravity of the driven side pulley 41 close to the center of rotation thereof is disposed at a position separate from the center line of the driven shaft 27 in the spring supporting member 45.

In this example, as shown in Fig. 6, the spring supporting member 45 includes: an inner peripheral portion 45a extended in the radial direction from the outer peripheral surface of the collar 46; a cylindrical portion 45b erected to the fixed sheave 42 side from the edge of the inner peripheral portion 45a; and an outer peripheral portion 45c extended in the radial direction from the edge of the cylindrical portion 46b. The outer peripheral portion 45c has plural holes 45d formed so as to pass through outer peripheral portion 45c. As shown in Fig. 7, these plural holes 45d are formed at equal intervals in the circumferential direction in the outer peripheral portion 45c.

The position-of-center-of-gravity adjusting part 49 is, for example, a rivet. The position-of-center-of-gravity adjusting part 49 is fitted in the hole 45d positioned on the opposite side across the driven shaft 27 with respect to a direction in which the position of the center of gravity is shifted from the center of rotation of the driven side pulley 41. For example, as shown in Fig. 7, when the position of the center of gravity G1 of the spring supporting member 45, the fixed sheave 42, the movable sheave 43, the collar 46, and the spring 44 (that is, parts except for the position-of-center-of-gravity adjusting part 49 in the driven side pulley 41) is not on the center line O of the driven shaft 27, the position-of-center-of-gravity adjusting part 49 is fitted in the hole 45d positioned on the side opposite to the position of the center of gravity G1 across the center line O. Moreover, the mass of the position-of-center-of-gravity adjusting part 49 is set according to the amount of shift from the center line O of the position of the center of gravity G1 (the distance between the position of the center of gravity G1 and the center line O, and the mass of the parts except for the position-of-center-of-gravity adjusting part 49 in the driven side pulley 41). Here, plural position-of-center-of-gravity adjusting parts 49 may be fitted according to the amount of shift from the center line O of the position of the center of gravity G1.

The plural holes 45d are formed, for example, in the step of manufacturing the spring supporting member 45. Moreover, the position at which the position-of-center-of-gravity adjusting part 49 is fitted and the mass of the position-of-center-of-gravity adjusting part 49 can be computed by measuring the amount of shift from the center of rotation of the position of the center of gravity of the spring supporting member 45, the fixed sheave 42, the movable sheave 43, the collar 46, and the spring 44 in a state where these parts are mounted on the driven shaft 27 and by measuring a direction in which the position of the center of gravity of these parts is shifted in the state. Then, the position-of-center-of-gravity adjusting part 49 of the mass computed in this manner is fitted in the hole 45d at a position computed in this manner. For this reason, the position-of-center-of-gravity adjusting part 49 is formed after the respective members constructing the driven side pulley 41 such as the spring supporting member 45 and the fixed sheave 42 are combined. In other words, the position of the center of gravity G1 and the amount of shift of the position of the center of gravity G1 are measured in a state where the respective members such as the fixed sheave 42 are combined. Then, the driven side pulley 41 has a rivet as the position-of-center-of-gravity adjusting part 49 fixed thereto at a position corresponding to the position of the center of gravity G1, the rivet having mass corresponding to the amount of shift of the position of the center of gravity G1.

Here, as shown in Fig. 4, the spring 44 is pressed onto the fixed sheave 42 side by the inner peripheral portion 45a of the spring supporting member 45. Moreover, a portion positioned outside in the vehicle width direction in the spring 44 is housed inside the cylindrical portion 45b.

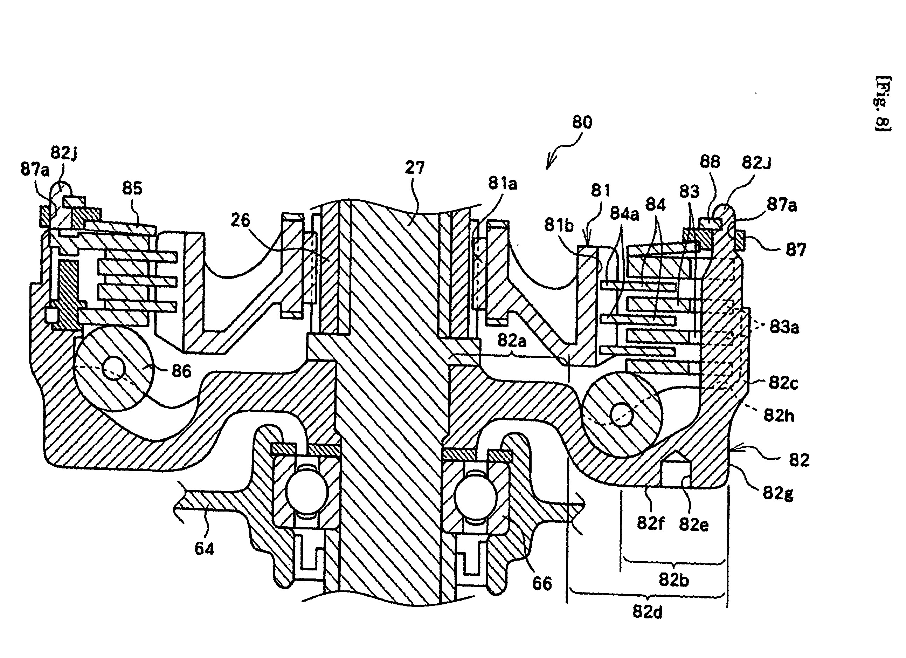

Next, the clutch 80 will be described. Fig. 8 is a section view of the clutch 80. As described above, the clutch 80 is disposed on the side opposite to the driven side pulley 41 across the center portion 27c of the driven shaft 27 (see Fig. 3). As shown in Fig. 8, the clutch 80 includes: a clutch inner 81 idling with respect to the driven shaft 27; and a clutch outer 82 having larger mass than the clutch inner 81 and rotating with the driven shaft 27. Moreover, in the example described here, the clutch 80 is a multiple disc clutch and includes: plural friction plates 83 rotating with the clutch outer 82; and plural clutch plates 84 rotating with the clutch inner 81. Here, the clutch inner 81, the friction plates 83, and the clutch plates 84 are housed in the clutch outer 82. Moreover, the friction plate 83 has mass larger than the clutch plate 84.

The clutch outer 82 is a cylindrical member having its outside end in the vehicle width direction closed and includes: an inner peripheral portion 82a extended in the radial direction from the outer peripheral surface of the driven shaft 27; an outer peripheral portion 82b that is further extended in the radial direction from the outer peripheral edge of the inner peripheral portion 82a and that is slightly bulged in the axial direction of the driven shaft 27; and a cylindrical portion 82c erected in the axial direction from the edge of the outer peripheral portion 82b. The inner peripheral portion 82a has a gear formed on its inner peripheral surface. The gear is engaged with a gear formed on the outer peripheral surface of the driven shaft 27. The cylindrical portion 82c has a guide groove 82h, which is extended in the axial direction, formed on its inner peripheral surface. The friction plate 83 has a protrusion 83a formed thereon, the protrusion 83a being protruded in the radial direction and being fitted in the guide groove 82h. The protrusion 83a is guided by the guide groove 82h and hence the friction plate 83 is moved in the axial direction. Moreover, the protrusion 83a is engaged with the guide groove 82h and hence the friction plate 83 is rotated with the clutch outer 82.

The clutch inner 81 is arranged inside the cylindrical portion 82c of the clutch outer 82. The driven shaft 27 has a gear 26 fitted therein, the gear 26 idling with respect to the driven shaft 27. The clutch inner 81 has a gear 81a formed on its inner peripheral surface, the gear 81a being engaged with the gear 26. The clutch inner 81 is rotated with the gear 26. The clutch inner 81 has a guide groove 81b formed on its outer peripheral surface, the guide groove 81b being extended in the axial direction. The clutch plate 84 has a protrusion 84a formed on its inner peripheral edge, the protrusion 84a being protruded inside in the radial direction and being fitted in the guide groove 81 b. The protrusion 84a is guided by the guide groove 81 b and hence the clutch plate 84 is moved in the axial direction. Moreover, the protrusion 84a is engaged with the guide groove 81 b and hence the clutch inner 81 is rotated with the clutch plate 84.

The plural friction plates 83 and the plural clutch plates 84 are alternately arranged and are pressed onto each other and are moved in association with each other, whereby the torque is transmitted from the friction plates 83 to the clutch plates 84. In the example shown in Fig. 8, the clutch 80 is an automatic clutch, and the connection or interruption of the clutch 80 is automatically performed according to the rotation speed of the driven shaft 27. Specifically, the clutch 80 includes a weight roller 86 that is rotated around the driven shaft 27 along with the clutch outer 82, and a diaphragm spring 85 that biases the friction plates 83 in the axial direction. The plural friction plates 83 and the plural clutch plates 84 are arranged between the weight roller 86 and the diaphragm spring 85. When the clutch outer 82 is rotated, the weight roller 86 is moved in the radial direction by a centrifugal force to press the friction plates 83 onto the clutch plates 84. With this, the clutch 80 is bought into a connection state. Moreover, when the rotation speed of the driven shaft 27 is decreased, the weight roller 86 is returned inside in the radial direction (to the driven shaft 27 side) and hence the friction plates 83 are separated from the clutch plates 84, whereby the clutch plate 80 is brought into an interruption state.

An annular stopper 87 is arranged at a position opposite to the outer peripheral portion 82b and the inner peripheral portion 82a across the friction plates 83 and the clutch plates 84. The cylindrical portion 82c of the clutch outer 82 has a protrusion 82j protruding in the axial direction of the clutch 80 formed thereon. The protrusion 82j has the annular stopper 87 fitted thereon. The annular stopper 87 prevents the friction plates 83 and the diaphragm spring 85 from coming off from the clutch outer 82. Here, the annular stopper 87 has plural holes 87a formed therein, the plural holes 87a having the protrusion 82j fitted therein. Moreover, an annular clip 88 for preventing the annular stopper 87 from coming off is fitted on the inner peripheral surface of the protrusion 82j.

There is a case where the position of the center of gravity of the clutch 80 is shifted from the center of rotation (center line of the driven shaft 27) by a manufacture error and the like. For this reason, a position-of-center-of-gravity adjusting portion 82e for bringing the position of the center of gravity of the clutch 80 close to its center of rotation is formed at a position separate from the center line of the driven shaft 27 in the clutch outer 82. In the example described here, a thick portion 82d that is thicker than the other portion of the clutch outer 82 is formed at a position outside in the radial direction of the outer peripheral portion 82b (direction perpendicular to the center line of the driven shaft 27). A hole as the position-of-center-of-gravity adjusting portion 82e is formed in a surface 82f outside in the vehicle width direction of this thick portion 82d.

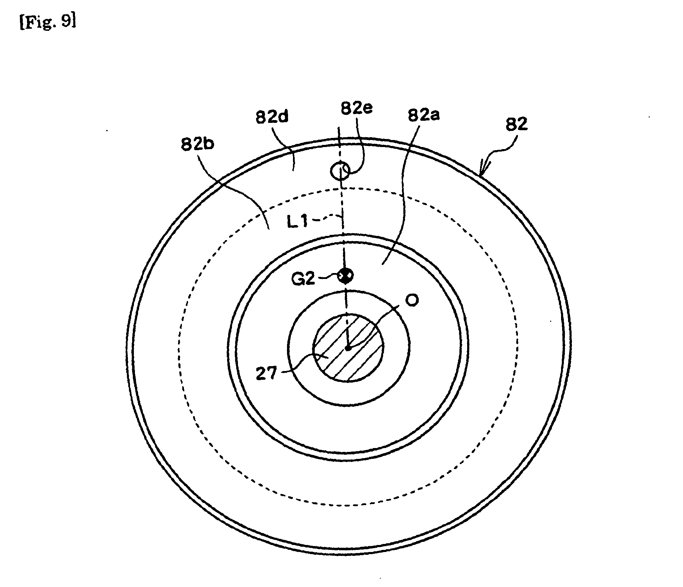

Fig. 9 is a diagram, when viewed in the axial direction, of the clutch outer 82. As shown in the diagram, the thick portion 82d is formed on the entire periphery of the outer peripheral portion 82b and in the shape of a circular ring surrounding the driven shaft 27. As shown in Fig. 8, the thick portion 82d is formed in such a way that its thickness becomes larger toward the outside in the radial direction.

The position-of-center-of-gravity adjusting portion 82e is formed on the same side as a direction in which the position of the center of gravity of the clutch 80 is shifted from the center of rotation of the clutch 80 in the thick portion 82d. For example, as shown in Fig. 9, when the position of the center of gravity G2 of the whole of the clutch 80 (that is, the clutch outer 82, the friction plate 83, the clutch plate 84, and the clutch inner 81) before the formation of the position-of-center-of-gravity adjusting portion 82e is not on a center line O of the driven shaft 27, the position-of-center-of-gravity adjusting portion 82e is formed at a position on an extension line L1 connecting the center line O and the position of the center of gravity G2. Moreover, the size (diameter and depth of the hole) of the position-of-center-of-gravity adjusting portion 82e is set according to the amount of shift from the center line O of the position of the center of gravity G2 (distance between the position of the center of gravity G2 and the center line O and the mass of the clutch 80). Here, plural position-of-center-of-gravity adjusting portions 82e may be formed according to the amount of shift from the center line O of the position of the center of gravity G2. Moreover, in the example shown in Fig. 8, the position-of-center-of-gravity adjusting portion 82e is formed on the surface 82f outside in the vehicle width direction of the thick portion 82d, but the position-of-center-of- gravity adjusting portion 82e may be formed, for example, on an outer peripheral surface 82g of the thick portion 82d. The position-of-center-of-gravity adjusting portion 82e is formed after the respective members constructing the clutch 80 such as the clutch outer 82 and the friction plate 83 are combined. In other words, the position of the center of gravity G2 and the amount of shift from the center line O of the position of the center of gravity G2 are measured in a state where the respective members such as the clutch outer 82 are combined. A hole is formed as the position-of-center-of-gravity adjusting portion 82e in the thick portion 82d of the clutch outer 82 so as to reduce the amount of shift.

Finally, the transmission path of a driving force in the engine unit 10 will be described. The rotation of the crankshaft 21 is reduced by the continuously variable transmission 30 and is transmitted to the driven shaft 27. The rotation of the driven shaft 27 is transmitted to the clutch outer 82 of the clutch 80. When the clutch 80 is in the connection state, the rotation of the driven shaft 27 is transmitted from the clutch outer 82 to the clutch inner 81 and then is transmitted from the clutch inner 81 to the gear 26. The gear 26, as shown in Fig. 3, is engaged with a gear 28a of an intermediate shaft 28 arranged forward of the driven shaft 27. Moreover, the intermediate shaft 28 has a gear 28b formed thereon and the gear 28b is engaged with a gear 29b formed on the output shaft 29. With this, the rotation of the gear 26 is transmitted to the output shaft 29 via the intermediate shaft 28. The output shaft 29 has a sprocket 29c mounted thereon, the sprocket 29c having a chain wound around itself. The chain is wound around also a sprocket (not shown) rotated with the rear wheel 4 and hence the rotation of the output shaft 29 is transmitted to the rear wheel 4 via the chain.

According to the clutch 80 described above, the position-of-center-of-gravity adjusting portion 82e is formed in the thick portion 82d having a large thickness and hence a part that is used for bringing the position of the center of gravity G2 of the clutch 80 close to the center of rotation can be increased, so that even when the position of the center of gravity G2 is greatly shifted from the center of rotation, the clutch itself does not need to be replaced and hence the efficiency of a manufacture work can be enhanced.

Moreover, the thick portion 82d has a hole formed therein as the position-of-center-of-gravity adjusting portion 82e. For this reason, the accuracy of adjusting the position of the center of gravity can be increased. That is, the position of the center of gravity can be finely adjusted by adjusting the depth, the diameter, and the position of the hole.

Further, in the clutch 80, the clutch outer 82 includes the inner peripheral portion 82a extended in the radial direction from the outer peripheral surface of the driven shaft 27 and the outer peripheral portion 82b further extended in the radial direction from the inner peripheral portion 82a, and the thick portion 82d is formed in the outer peripheral portion 82b. For this reason, the position of the center of gravity G2 of the clutch 80 can be displaced to the center line O side the by small manufacture as compared with a case where the thick portion is formed in the inner peripheral portion.

Still further, according to the continuously variable transmission 30 described above, the spring supporting member 45 having the position-of-center-of-gravity adjusting part 49 fitted therein is positioned on the outside in the vehicle width direction of the fixed sheave 42 and the movable sheave 43, that is, on the side close to a worker. For this reason, the work of bringing the position of the center of gravity G1 close to the center of rotation can be easily performed even in the state where the fixed sheave 42 and the movable sheave 43 are mounted on the driven shaft 27.

Still further, in the continuously variable transmission 30, the position-of-center-of-gravity adjusting part 49 is fitted in the spring supporting member 45 that sandwiches the spring 44 between itself and the movable sheave 43 and that presses the spring 44 onto the movable sheave 43 side. For this reason, this can eliminate the need for providing the driven side pulley 41 with an exclusive rotary member so as to dispose the position-of-center-of-gravity adjusting part 49, which can enhance the productivity of the continuously variable transmission 30.

Still further, in the continuously variable transmission 30, the spring supporting member 45 includes the inner peripheral portion 45a that abuts against the end portion of the spring 44 and that presses the spring 44 onto the movable sheave 43 side and the outer peripheral portion 45c that is positioned outside in the radial direction of the inner peripheral portion 45a. The position-of-center-of-gravity adjusting part 49 is fitted in the outer peripheral portion 45c of the spring supporting member 45. For this reason, the position of the center of gravity G2 of the driven side pulley 41 of the continuously variable transmission 30 can be displaced to the center line O side by small manufacture, for example, as compared with a case where the position-of-center-of-gravity adjusting part 49 is fitted in the inner peripheral portion 45a.

Still further, in the continuously variable transmission 30, the position-of-center-of-gravity adjusting part 49 is a rivet. For this reason, the work of bringing the position of the center of gravity G1 close to the center of rotation can be easily performed even in the state where the fixed sheave 42 and the movable sheave 43 are mounted on the driven shaft 27.

Still further, in the continuously variable transmission 30, the position-of-center-of-gravity adjusting part 49 is fitted in the spring supporting member 45. For this reason, the work of bringing the position of the center of gravity G1 close to the center of rotation can be easily performed, for example, as compared with a case where the position of the center of gravity of the movable sheave 43 and the fixed sheave 42 is adjusted by cutting away a portion of the spring supporting member 45. Moreover, it is possible to prevent the occurrence of metal powder or the like that occurs when the spring supporting member 45 is cut away.

Incidentally, the present teaching is not limited to the clutch 80 and the continuously variable transmission 30 that have been described above but can be variously modified.

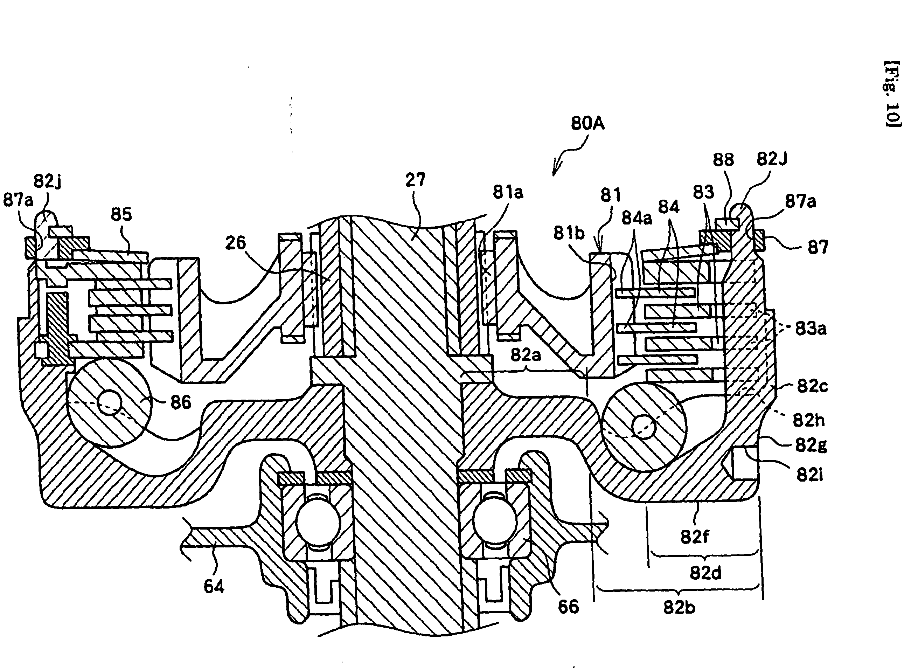

For example, in the clutch 80, the thick portion 82d is formed on the outer peripheral portion 82b, but the thick portion 82d may be formed on the cylindrical portion 82c. In other words, the thickness of the cylindrical portion 82c may be made larger. Moreover, the hole as the position-of-center-of-gravity adjusting portion 82e may be formed so as to pass through the outer peripheral portion 82b in the axial direction of the driven shaft 27. Moreover, in the clutch 80, the position-of-center-of-gravity adjusting portion 82e is formed in the surface 82f outside in the vehicle width direction of the thick portion 82d, but as described above, the position-of-center-of-gravity adjusting portion 82e may be formed in the outer peripheral surface 82g of the thick portion 82d. Fig. 10 is a section view of a clutch 80A according to this embodiment. In the clutch 80A, a hole is formed as a position-of-center-of-gravity adjusting portion 82i in the outer peripheral surface 82g of the thick portion 82d. The position of the position-of-center-of-gravity adjusting portion 82i in a peripheral direction, like the above-mentioned position-of-center-of-gravity adjusting portion 82e, is a position on an extension line connecting the position of the center of gravity of the clutch 80A in a state where the position-of-center-of-gravity adjusting portion 82i is not formed and the center line O passing through the rotational center of the clutch 80A. Accordingly, a central axis of the hole can extend in radial or longitudinal direction of the clutch 80, 80A.

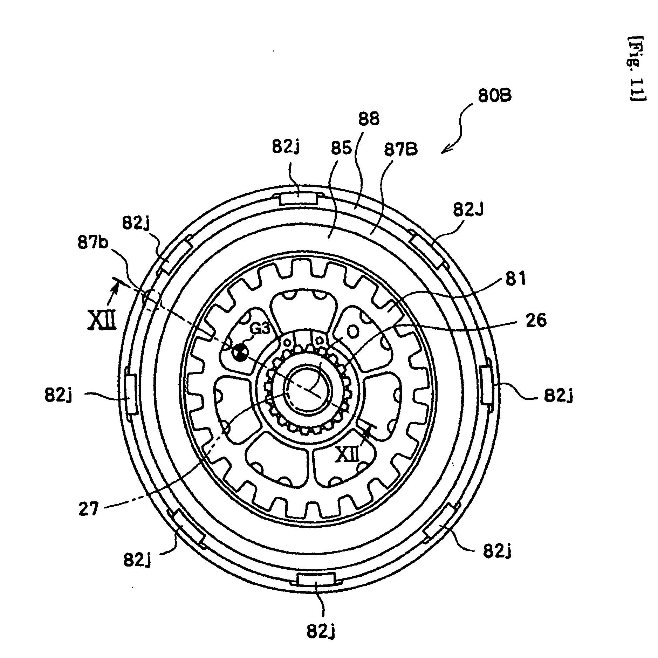

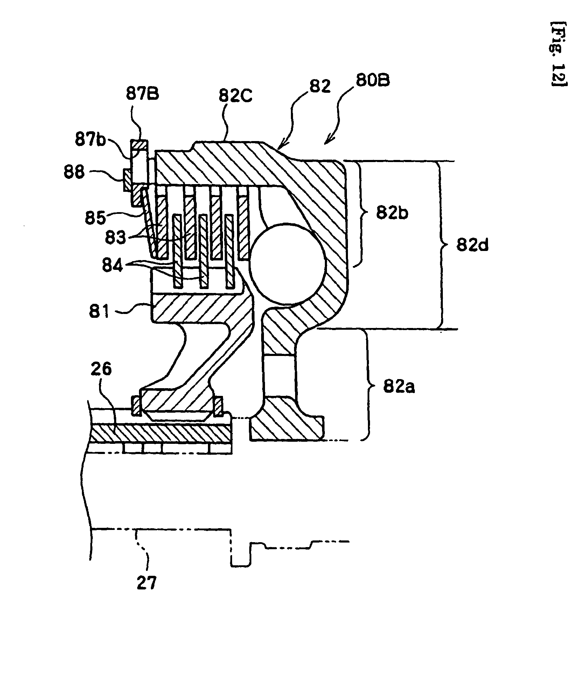

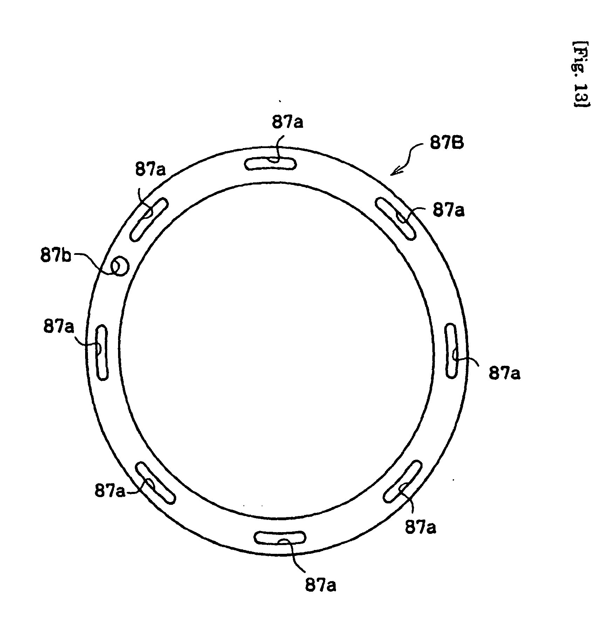

Moreover, the clutch may have a hole formed in the annular stopper 87 thereof as a position-of-center-of-gravity adjusting portion, in place of the position-of-center-of-gravity adjusting portions 82i, 82e formed in the clutch outer 82 or in addition to the position-of-center-of-gravity adjusting portions 82i, 82e. Fig. 11 is a diagram when a clutch 80B according to this embodiment is viewed in the axial direction of the driven shaft 27 and is a diagram when the clutch 80B is viewed from the center side in the vehicle width direction. Fig. 12 is a section view taken on a line XII - XII shown in Fig. 11. Fig. 13 is a front view of an annular stopper 87B fixed to the clutch 80B. Here, in Fig. 11 and Fig. 12, the same portions as those described above are denoted by the same reference symbols.

As shown in Fig. 11 to Fig. 13, the annular stopper 87B has a hole formed therein as a position-of-center-of-gravity adjusting portion 87b. The position of the position-of-center-of-gravity adjusting portion 87b in the peripheral direction of the annular stopper 87B, like the above-mentioned position-of-center-of-gravity adjusting portions 82e, 82i, is a position on an extension line connecting the position of the center of gravity G3 of the clutch 80B in a state where the position-of-center-of-gravity adjusting portion 87b is not formed and the center line O passing through the rotational center of the clutch 80B. Moreover, the size (diameter of the hole) of the position-of-center-of-gravity adjusting portion 87b is set according to the amount of shift from the center line O of the position of the center of gravity G3. Here, plural holes 87a formed at equal intervals in the peripheral direction are shown in Fig, 13. As described above, the protrusion 82j of the clutch outer 82 is fitted in the hole 87a (see Fig. 8). The position-of-center-of-gravity adjusting portion 87b is positioned between the holes 87a.

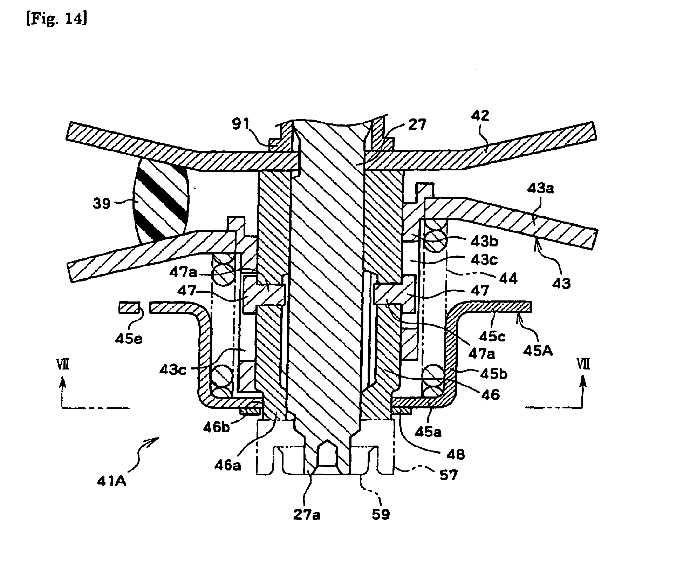

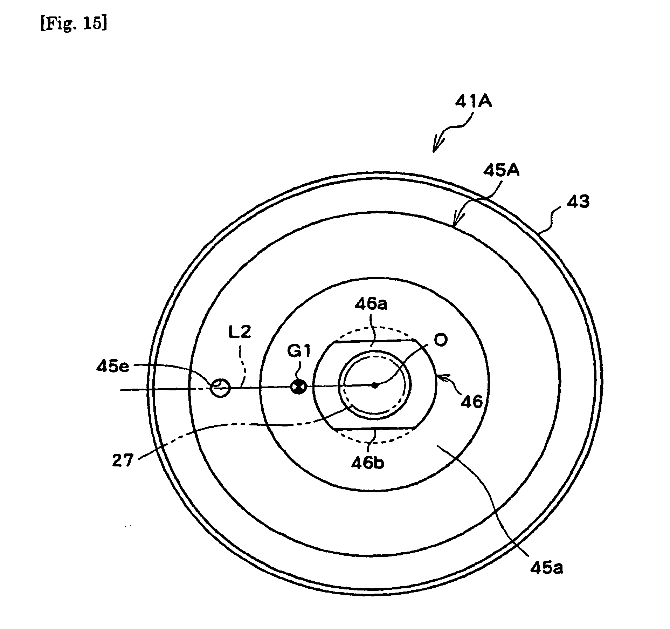

Moreover, in the above description, the driven side pulley 41 has a rivet fixed thereto as the position-of-center-of-gravity adjusting part 49. However, the driven side pulley 41 may have a hole formed therein as the position-of-center-of-gravity adjusting portion in place of the rivet. Fig. 14 is a section view of a driven side pulley 41A in this embodiment. Fig. 15 is a diagram obtained when the driven side pulley 41 A is viewed in the axial direction. As shown in the drawing, in the driven side pulley 41A, a spring supporting member 45A has a hole formed therein as a position-of-center-of-gravity adjusting portion 45e. The position of the position-of-center-of-gravity adjusting portion 45e in the peripheral direction is a position that is opposite to the position-of-center-of-gravity adjusting part 49 and that is on a line L2 extended from the center line O toward the position of the center of gravity G1 in a state where the respective members constructing the driven side pulley 41 are combined. Here, in the driven side pulley 41A, the holes 45d positioned at equal intervals in the peripheral direction are not formed, which is different from the driven side pulley 41.

Further, in the above description, the clutch 80 is an automatic multiple disc clutch including the plural friction plates 83 and the plural clutch plates 84. However, the clutch may be an automatic centrifugal clutch of the type in which a weight having a friction plate is moved outward in the radial direction by a centrifugal force and hence is pressed onto the inner peripheral surface of the clutch outer to transmit torque.

Still further, in the continuously variable transmission 30, the position-of-center-of-gravity adjusting part 49 is fitted in the spring supporting member 45. However, there may be provided an exclusive member that is rotated with the movable sheave 43 and the fixed sheave 42 and that has the position-of-center-of-gravity adjusting part 49 fitted therein.

The description above discloses (among others) an embodiment of a clutch comprising: a clutch inner mounted so as to be rotated around a shaft; a clutch outer that is mounted so as to be rotated around the shaft and that houses the clutch inner and that transmits or interrupts torque between the clutch outer and the clutch inner, wherein the clutch outer has a thick portion formed therein, the thick portion having a larger thickness than other portion of the clutch outer, and the clutch outer has a position-of-center-of-gravity adjusting portion formed at a position separate from an axial center of the shaft of the thick portion, the position-of-center-of-gravity adjusting portion bringing a center of gravity of the clutch close to the axial center of the shaft.

Preferably, the thick portion has a hole formed therein as the position-of-center-of-gravity adjusting portion.

Further, preferably the clutch outer includes an inner peripheral portion extended in a radial direction from an outer peripheral surface of the shaft and an outer peripheral portion further extended in the radial direction from the inner peripheral portion, and the thick portion is formed in the outer peripheral portion.

There is also disclosed an embodiment of a continuously variable transmission comprising: a pair of sheaves that are arranged so as to face each other and around which a belt for transmitting engine torque is looped and which are rotated around a shaft; and a rotary member that is arranged on the shaft and that is rotated with the pair of sheaves, wherein the rotary member is arranged outside in a vehicle width direction of the pair of sheaves, and the rotary member has a position-of-center-of-gravity adjusting part fitted at a position separate in a radial direction from an axial center of the shaft, the position-of-center-of-gravity adjusting part bringing a center of gravity of the pair of sheaves and the rotary member close to the axial center of the shaft.

Preferably, a spring is arranged on the shaft, wherein the pair of sheaves are a fixed sheave mounted on the shaft and a movable sheave that faces the fixed sheave in an axial direction of the shaft and that is biased to the fixed sheave side by the spring, and the rotary member is a spring supporting member that sandwiches the spring between the rotary member and the movable sheave and that presses the spring onto the movable sheave side.

Further, preferably the rotary member includes an inner peripheral that abuts against an end portion of the spring to press the spring to the movable sheave side and an outer peripheral portion that is positioned outside in the radial direction of the inner peripheral portion, and the position-of-center-of-gravity adjusting part is fitted in the outer peripheral portion of the rotary member.

Further, preferably the position-of-center-of-gravity adjusting part is a weight.

Further, preferably the position-of-center-of-gravity adjusting part is fitted in the rotary member.

Preferably, an engine unit includes the clutch according to one of the preceding embodiments.

Preferably, an engine unit includes the continuously variable transmission according to one of the preceding embodiments.

Preferably, a straddle-type vehicle includes the engine unit according to one of the preceding embodiments.

In order to enhance the efficiency of the manufacture work of bringing the position of the center of gravity close to the center of rotation, the following is preferably suggested:

A clutch 80 includes a clutch inner 81 and a clutch outer 82 that houses the clutch inner 81 and that transmits or interrupts torque between itself and the clutch inner 81. The clutch outer 82 has a thick portion 82d formed thereon, the thick portion 82d having a larger thickness than the other portion of the clutch outer 82. A position-of-center-of-gravity adjusting portion 82e for bringing the center of gravity of the clutch 80 close to the axial center of a driven shaft 27 is formed at a position separate from the axial center of the driven shaft 27 of the thick portion 82d.

## Claims

1. Drive unit for a vehicle, in particular a straddle-type vehicle, the drive unit comprising a continuously variable transmission (30), said continuously variable transmission (30) having at least one shaft (27) representing a center of rotation (0) and at least one position-of-center-of-gravity adjusting means (49) located at a position separate in radial direction from an axial direction of the shaft (27), said position-of-center-of-gravity adjusting means (49) being located to approach a center of gravity of the continuously variable transmission (30) to the axial center of the shaft (27), wherein the continuously variable transmission (30) comprises:
a pair of sheaves (42,43) which face each other, which are rotatable around the shaft (27) and around which a belt (41) is looped; and
a rotary member that is arranged on the shaft (27) and that is rotatable with the pair of sheaves (42,43), the rotary member having the position-of-center-of-gravity adjusting means (45e,49) fitted at a position separate in radial direction from an axial center of the shaft (27), the position-of-center-of-gravity adjusting means (45e,49) being configured to bring the center of gravity of the pair of sheaves (42,43) and of the rotary member close to the axial center of the shaft (27), wherein a spring (44) is arranged on the shaft (27), the pair of sheaves (42,43) are a fixed sheave (42) mounted on the shaft (27) and a movable sheave (43) that faces the fixed sheave (42) in axial direction of the shaft (27) and that is biased to the fixed sheave (42) side by the spring (44), and
the rotary member is a spring supporting member (45) that sandwiches the spring (44) between the rotary member and the movable sheave (43) and that is configured to press the spring (44) onto the side of the movable sheave (43), wherein the rotary member includes an inner peripheral portion (45a) that abuts against an end portion of the spring (44) to press the spring (44) towards the movable sheave (43) and an outer peripheral portion (45c) that is positioned outside in radial direction of the inner peripheral portion (45a), and the position-of-center-of-gravity adjusting means (45e,49) is fitted in the outer peripheral portion (45c) of the rotary member.

2. Drive unit according to claim 1, further comprising a clutch (80,80A,80B), said clutch (80,80A,80B) having at least one shaft (27) representing a center of rotation (0) and a further position-of-center-of-gravity adjusting means (82e,82i) located at a position separate in radial direction from an axial direction of the shaft (27), said further position-of-center-of-gravity adjusting means (82e,82i) being located to approach a center of gravity of the clutch (80,80A,80B) to the axial center of the shaft (21,27).

3. Drive unit according to claim 2, wherein the clutch (80,80A,80B) comprises:
a clutch inner (81) rotatable around the shaft (27);
a clutch outer (82) rotatable around the shaft (27) and housing the clutch inner (81),
said clutch (80,80A,80B) being configured to transmit or interrupt torque between the clutch outer (82) and the clutch inner (81),
wherein the clutch outer has a thick portion (82d) preferably having a larger thickness than remaining portions of the clutch outer (82), and the clutch outer (82) comprises the position-of-center-of-gravity adjusting means (82e,82i) formed at a position separate from an axial center of the shaft (27) of the thick portion (82d), the position-of-center-of-gravity adjusting means (82e,82i) being configured to bring the center of gravity of the clutch (80,80A,80B) close to the axial center of the shaft (27).

4. Drive unit according to claim 3, wherein the thick portion (82d) has a hole formed therein as the position-of-center-of-gravity adjusting means (82e,82i).

5. Drive unit according to claim 3 or 4, wherein the clutch outer (82) includes an inner peripheral portion (82a) extending in radial direction from an outer peripheral surface of the shaft (27) and an outer peripheral portion (82b) further extending in radial direction from the inner peripheral portion (82a), and the thick portion (82d) is formed in the outer peripheral portion (82b).

6. Drive unit according to claim 4 or 5, wherein a central axis of the hole extends in radial or longitudinal direction of the clutch (80,80A,80B).

7. Drive unit according to at least one of the claims 1 to 6, wherein at least one of the position-of-center-of-gravity adjusting means (49,82e,82i) comprises at least one hole formed in the clutch (80,80A,80B) and/or the continuously variable transmission (30). preferably in the periphery of the clutch (80,80A,80B) and/or of the continuously variable transmission (30).

8. Drive unit according to claim 7, wherein several holes (45d) are formed around the shaft (27), preferably at equal intervals.

9. Drive unit according to one of claims 1 to 8, wherein the position-of-center-of-gravity adjusting means (49) comprises at least one additional weight, which is preferably inserted into a hole (45d).

10. Drive unit according to claim 9, wherein the additional weight is a rivet.

11. Drive unit according to one of claims 1 to 10, wherein the position-of-center-of-gravity adjusting means (45e,49) is fitted in the rotary member.

12. Engine unit having an engine (20) and a drive unit according to one of claims 1 to 11.

13. Vehicle, in particular a straddle-type vehicle, having an engine unit according to claim 12.

## Patentansprüche

1. Antriebseinheit für ein Fahrzeug, insbesondere ein Fahrzeug vom Grätschsitz-Typ, wobei die Antriebseinheit ein stufenlos veränderbares Getriebe (30) aufweist, das stufenlos veränderbare Getriebe (30) zumindest eine Welle (27) hat, die eine Rotationsmitte (0) und zumindest eine Schwerpunktposition- Einstelleinrichtung (49), angeordnet an einer Position separat in radialer Richtung von einer axialen Richtung der Welle (27), wobei Schwerpunktposition- Einstelleinrichtung (49) angeordnet ist, um einen Schwerpunkt des stufenlos veränderbaren Getriebes (30) zu der axialen Mitte der Welle (27) anzunähern, wobei das stufenlos veränderbare Getriebe (30) aufweist:
ein Scheibenpaar (42, 43), die einander zugewandt sind, die drehbar um die Welle (27) sind und um die ein Riemen (41) geschlungen ist; und
ein Drehteil, das auf der Welle (27) angeordnet ist, und das mit dem Scheibenpaar (42, 43) drehbar ist, wobei das Drehteil die Schwerpunktposition- Einstelleinrichtung (45e, 49) hat, eingesetzt in einer Position separat in der radialen Richtung von einer axialen Mitte der Welle (27), wobei die Schwerpunktposition- Einstelleinrichtung (45e, 49) konfiguriert ist, den Schwerpunkt des Scheibenpaars (42, 43) und das Drehteil nah an die axiale Mitte der Welle (27) zu bringen, wobei eine Feder (44) auf der Welle (27) angeordnet ist, das Scheibenpaar (42, 43) ist eine feststehende Scheibe (42), montiert auf der Welle (27), und eine bewegbare Scheibe (43), die der feststehende Scheibe (42) in axialer Richtung der Welle (27) zugewandt ist und die zur Seite der feststehenden Scheibe (42) durch die Feder (44) vorgespannt ist und das Drehteil ein Federlagerteil (45) ist, das die Feder (44) zwischen dem Drehteil und der bewegbaren Scheibe (43) aufnimmt und das konfiguriert ist, die Feder (44) auf die Seite der bewegbaren Scheibe (43) zu pressen, wobei das Drehteil einen inneren Umfangsabschnitt (45a) enthält, der gegen einen Endabschnitt der Feder (44) anliegt, um die Feder (44) in Richtung zu der bewegbaren Scheibe (43) zu pressen, und einen äußeren Umfangsabschnitt (45c), der in radialer Richtung außerhalb des inneren Umfangsabschnittes (45a) positioniert ist, und die Schwerpunktposition- Einstelleinrichtung (45e, 49) in den äußeren Umfangsabschnitt (45c) des Drehteils eingesetzt ist.

2. Antriebseinheit nach Anspruch 1, außerdem aufweisend eine Kupplung (80, 80A, 808), wobei die Kupplung (80, 80A, 808) zumindest eine Welle (27) hat, die eine Rotationsmitte (0) und eine weitere Schwerpunktposition- Einstelleinrichtung (82e, 82i), angeordnet an einer Position separat in radialer Richtung von einer axialen Richtung der Welle (27), wobei die weitere Schwerpunktposition- Einstelleinrichtung (82e, 82i) vorgesehen ist, einen Schwerpunkt der Kupplung (80, 80A, 808) der axialen Mitte der Welle (21, 27) anzunähern.

3. Antriebseinheit nach Anspruch 2, wobei die Kupplung (80, 80A, 808) aufweist:
ein Kupplungsinneres (81), drehbar um die Welle (27);
ein Kupplungsäußeres (82), drehbar um die Welle (27) und das das Kupplungsinnere (81) unterbringt,
wobei die Kupplung (80, 80A, 808) konfiguriert ist, ein Drehmoment zwischen dem Kupplungsäußeren (82) und dem Kupplungsinneren (81) zu übertragen oder
zu unterbrechen,
wobei das Kupplungsäußere (82) einen dicken Abschnitt (82a) hat, bevorzugt mit einer größeren Dicke als die verbleibenden Abschnitte des Kupplungsäußeren (82), und wobei das Kupplungsäußere (82) die Schwerpunktposition- Einstelleinrichtung (82e, 82i) aufweist, gebildet an einer Position separat von einer axialen Mitte der Welle (27) des dicken Abschnittes (82d) der Schwerpunktposition- Einstelleinrichtung (82e, 82i), die konfiguriert ist, den Schwerpunkt der Kupplung (80, 80A, 808) nah an die axiale Mitte der Welle (27) zu bringen.

4. Antriebseinheit nach Anspruch 3, wobei der dicke Abschnitt (82d) eine darin gebildete Bohrung als die Schwerpunktposition- Einstelleinrichtung (82e, 82i) hat.

5. Antriebseinheit nach Anspruch 3 oder 4, wobei das Kupplungsäußere (82) einen inneren Umfangsabschnitt (82a) hat, der sich in radialer Richtung von einer äußeren Umfangsoberfläche der Welle (27) erstreckt und sich ein äußerer Umfangsabschnitt (82b) sich in radialer Richtung weiter von dem inneren Umfangsabschnitt (82a) erstreckt, und der dicke Abschnitt (82d) in dem äußeren Umfangsabschnitt (82b) gebildet ist.

6. Antriebseinheit nach Anspruch 4 oder 5, wobei sich eine mittlere Achse der Bohrung in radialer oder Längsrichtung der Kupplung (80, 80A, 808) erstreckt.

7. Antriebseinheit nach zumindest einem der Ansprüche 1 bis 6, wobei zumindest eine der Schwerpunktposition- Einstelleinrichtungen (49, 82e, 82i) zumindest eine Bohrung aufweist, gebildet in der Kupplung (80, 80A, 808) und / oder dem stufenlos veränderbaren Getriebe (30), bevorzugt in dem Umfang der Kupplung (80, 80A, 808) und / oder des stufenlos veränderbaren Getriebes (30).

8. Antriebseinheit nach Anspruch 7, wobei mehrere Bohrungen (45d) um die Welle (27), vorzugsweise in gleichen Intervallen, gebildet sind.

9. Antriebseinheit nach einem der Ansprüche 1 bis 8, wobei die Schwerpunktposition- Einstelleinrichtungen (49) zumindest ein zusätzliches Gewicht aufweist, das vorzugsweise in eine Bohrung (45d) eingesetzt ist.

10. Antriebseinheit nach Anspruch 9, wobei das zusätzliche Gewicht ein Niet ist.

11. Antriebseinheit nach einem der Ansprüche 1 bis 10, wobei die Schwerpunktposition- Einstelleinrichtungen (45e, 49) in das Drehteil eingesetzt ist.

12. Motoreinheit mit einer Brennkraftmaschine (20) und eine Antriebseinheit nach einem der Ansprüche 1 bis 11.

13. Fahrzeug, insbesondere ein Fahrzeug vom Grätschsitz- Typ, mit einer Brennkraftmaschine nach Anspruch 12.

## Revendications

1. Unité d'entraînement pour un véhicule, en particulier un véhicule du type à enfourcher, l'unité d'entraînement comprenant une transmission à variation continue (30), ladite transmission à variation continue (30) ayant au moins un arbre (27) qui représente un centre de rotation (0), et au moins un moyen de réglage de position de centre de gravité (49) qui se trouve à un endroit séparé, dans le sens radial, d'un sens axial de l'arbre (27), ledit moyen de réglage de position de centre de gravité (49) étant situé de manière à rapprocher le centre de gravité de la transmission à variation continue (30) du centre axial de l'arbre (27), étant précisé que la transmission à variation continue (30) comprend :
deux roues de poulie (42, 43) qui se font face, qui sont aptes à tourner sur l'arbre (27) et sur lesquelles est enroulée une courroie (41) ; et
un élément rotatif qui est disposé sur l'arbre (27) et qui est apte à tourner avec les deux roules de poulie (42, 43), l'élément rotatif ayant le moyen de réglage de position de centre de gravité (45e, 49) installé à un endroit séparé, dans le sens radial, d'un centre axial de l'arbre (27), le moyen de réglage de position de centre de gravité (45e, 49) étant conçu pour amener le centre de gravité des deux roues de poulie (42, 43) et de l'élément rotatif près du centre axial de l'arbre (27), étant précisé qu'un ressort (44) est disposé sur l'arbre (27), que les deux roues de poulie (42, 43) sont constituées par une roue fixe (42) montée sur l'arbre (27) et une roue mobile (43) qui fait face à la roue fixe (42) dans le sens axial de l'arbre (27) et qui est contrainte vers le côté roue fixe (42) par le ressort (44), et que l'élément rotatif est un élément de support de ressort (45) qui maintient en sandwich le ressort (44) entre l'élément rotatif et la roue mobile (43) et qui est conçu pour pousser le ressort (44) vers le côté de la roue mobile (43), étant précisé que l'élément rotatif comprend une partie périphérique intérieure (45a) qui bute contre une partie d'extrémité du ressort (44) pour pousser celui-ci vers la roue mobile (43), et une partie périphérique extérieure (45c) qui est placée à l'extérieur, dans le sens radial de la partie périphérique intérieure (45a), et que le moyen de réglage de position de centre de gravité (45e, 49) est installé dans la partie périphérique extérieure (45c) de l'élément rotatif.

2. Unité d'entraînement selon la revendication 1, comprenant un embrayage (80, 80A, 80B), ledit embrayage (80, 80A, 80B) ayant au moins un arbre (27) qui représente un centre de rotation (0), et un autre moyen de réglage de position de centre de gravité (82e, 82i) situé à un endroit séparé, dans un sens radial, d'un sens axial de l'arbre (27), cet autre moyen de réglage de position de centre de gravité (82e, 82i) étant situé de manière à rapprocher un centre de gravité de l'embrayage (80, 80A, 80B) du centre axial de l'arbre (21, 27).

3. Unité d'entraînement selon la revendication 2, étant précisé que l'embrayage (80, 80A, 80B) comprend :
une partie intérieure d'embrayage (81) apte à tourner sur l'arbre (27) ;
une partie extérieure d'embrayage (82) apte à tourner sur l'arbre (27) et logeant la partie intérieure d'embrayage (81), ledit embrayage (80, 80A, 80B) étant conçu pour transmettre ou interrompre le couple entre la partie extérieure (82) et la partie intérieure (81) de l'embrayage,
étant précisé que la partie extérieure d'embrayage a une partie épaisse (82d) qui présente de préférence une plus grande épaisseur que le reste de la partie extérieure d'embrayage (82), et que ladite partie extérieure (82) comprend le moyen de réglage de position de centre de gravité (82e, 82i) formé à un endroit de la partie épaisse (82d) séparé d'un central axial de l'arbre (27), le moyen de réglage de position de centre de gravité (82e, 82i) étant conçu pour amener le centre de gravité de l'embrayage (80, 80A, 80B) près du centre axial de l'arbre (27).

4. Unité d'entraînement selon la revendication 3, étant précisé qu'un trou est formé dans la partie épaisse (82d), comme moyen de réglage de position de centre de gravité (82e, 82i).

5. Unité d'entraînement selon la revendication 3 ou 4, étant précisé que la partie extérieure d'embrayage (82) comprend une partie périphérique intérieure (82a) qui s'étend dans le sens radial à partir d'une surface périphérique extérieure de l'arbre (27), et une partie périphérique extérieure (82b) qui s'étend également dans le sens radial à partir de la partie périphérique intérieure (82a), et la partie épaisse (82d) est formée dans la partie périphérique extérieure (82b).

6. Unité d'entraînement selon la revendication 4 ou 5, étant précisé qu'un axe central du trou s'étend dans le sens radial ou longitudinal de l'embrayage (80, 80A, 80B).

7. Unité d'entraînement selon l'une au moins des revendications 1 à 6, étant précisé que l'un au moins des moyens de réglage de position de centre de gravité (49, 82e, 82i) comprend au moins un trou formé dans l'embrayage (80, 80A, 80B) et/ou la transmission à variation continue (30), de préférence dans la périphérie de l'embrayage (80, 80A, 80B) et/ou la transmission à variation continue (30).

8. Unité d'entraînement selon la revendication 7, étant précisé que plusieurs trous (45d) sont formés autour de l'arbre (27), de préférence suivant des intervalles égaux.

9. Unité d'entraînement selon l'une des revendications 1 à 8, étant précisé que le moyen de réglage de position de centre de gravité (49) comprend au moins un poids supplémentaire, qui est de préférence introduit dans un trou (45d).

10. Unité d'entraînement selon la revendication 9, étant précisé que le poids supplémentaire est constitué par un rivet.

11. Unité d'entraînement selon l'une des revendications 1 à 10, étant précisé que le moyen de réglage de position de centre de gravité (45e, 49) est installé dans l'élément rotatif.

12. Unité de moteur ayant un moteur (20) et une unité d'entraînement selon l'une des revendications 1 à 11.

13. Véhicule, en particulier véhicule du type à enfourcher, ayant une unité de moteur selon la revendication 12.
